# EUROPÄISCHE PATENTSCHRIFT

(11) **EP 0 676 125 B1**
(45) Veröffentlichungstag und Bekanntmachung des Hinweises auf die Patenterteilung: **02.12.1998**
(21) Anmeldenummer: 95104940.2
(22) Anmeldetag: 03.04.1995
(51) Int. Cl.: A01C 5/06

(54) **An ein Sägerät anschliessbares Rad zum Zustreichen einer Furche**
Wheel, adjustable on a seed drill for closing the furrow
Roue adaptable à un semoir pour fermer le sillon

(30) Priorität: 11.04.1994 US 226156
(43) Veröffentlichungstag der Anmeldung: 11.10.1995
(73) Patentinhaber: Deere & Company, Moline, Illinois 61265-8098 (US)
(72) Erfinder: Ott, David Fredrick, Sherrard, Illinois 61281 (US); Yoder, Alfred Dean, Geneseo, Illinois 61254 (US)
(74) Vertreter: Feldmann, Bernhard

(56) Entgegenhaltungen:
- EP-A- 0 088 897
- DE-A- 1 902 125
- US-A- 2 331 819
- US-A- 2 668 490

## Beschreibung

Die Erfindung bezieht sich auf ein an ein Sägerät anschließbares und im Einsatz umlaufendes Rad zum Zustreichen einer Saatgutfurche, das scheibenförmig ausgebildet ist, einen äußeren Scheibenkranz aufweist und mit einer der Furche zugelegenen Seite versehen ist.

Derartige Zustreichräder (EP-A1-0 117 745) werden in der Regel bei schwierigen Bodenverhältnissen, insbesondere bei einem sogenannten Direktsaatverfahren eingesetzt. Diese Verfahren werden immer populärer. Nach einer Ernte werden die Stoppeln nicht mehr untergepflügt oder sonst wie in den Boden eingebracht. Sie werden gegebenenfalls mit Häckselgut auf dem Feld belassen. Derartige Verfahren haben nicht zuletzt für den Landwirt verschiedene Vorteile, stellen aber an die Sägeräte erhöhte Anforderungen, weil der Boden relativ hart, naß und beispielweise auch schmierig sein kann. Außerdem ist er noch mit Pflanzenrückständen versehen. Die bekannten Zustreichräder laufen beiderseits einer zuvor gezogenen Furche, in die Saatgut abgelegt wurde, hinter Einrichtungen, die die Furche ziehen. Sie haben die Aufgabe, die Furche mit Erdreich vollständig zu füllen, damit Vögel oder andere Tiere keinen Zugang zum Saatgut haben. Außerdem soll der Boden um das einzelne Saatkorn herum leicht verdichtet werden, um gute Keimbedingungen zu schaffen. Lufträume in der Furche und vor allen Dingen in der unmittelbaren Umgebung des Saatgutes, die zu einem Austrocknen und zu einem Aufbrechen des Bodens führen, dürfen nicht entstehen, weil auch sie der Keimung nicht förderlich sind. Die bekannten Zustreichräder erfüllen diese Voraussetzungen nicht oder nur zum Teil, wenn es sich um normale Saatbedingungen handelt.

Es ist deshalb für schwierige Bodenbedingungen bereits vorgeschlagen worden, die Zustreichräder als Zinkenräder zu gestalten oder den äußeren Scheibenrand in gewölbte Segmente aufzuteilen, die abwechselnd nach innen und nach außen ausgebogen sind (US-A-4 070 974), was aber auch nicht in allen Fällen zu dem erhofften Erfolg führte.

Auch ist es nicht mehr neu (US-A-2 668 490), ein Andrückrad für Sägeräte in seinem Felgenbereich gitterartig auszubilden, wobei die Lücken zwischen den V-förmigen Gitterstäben durch einen endlosen elastischen Gummistreifen geschlossen werden. Mit einer derartigen Ausbildung wird eine Selbstreinigung erzielt, da anhaftendes Erdreich durch den in die Lücken zurückspringenden Gummistreifen abgeschüttelt wird.

Die mit der Erfindung zu lösende Aufgabe wird in einem Zustreichrad gesehen, das auch bei schwierigsten Einsatzverhältnissen die gestellten Anforderungen zumindest teilweise erfüllt. Die Erfindung sieht deshalb vor, daß das Rad an seiner der Furche zugelegenen Seite mit Ausnehmungen versehen ist, die sich bis in den Scheibenkranz erstrecken und mit Bezug auf den Querschnitt von der Furchenseite aus schräg in Richtung auf die der Furchenseite abgelegene Seite des Rades erstrecken und diese Seite nicht durchdringen. Auf diese Weise wird die Furche nicht zugedrückt, sondern im wesentlichen zugeschaufelt, so daß sich auch bei schlechten Bodenbedingungen oder bei einem Direktsaatverfahren ein hervorragender Kontakt zwischen dem Saatgut und dem aufgeworfenen Boden ergibt. Das Saatgut wird vollständig durch den Boden abgedeckt bzw. von dem Boden umhüllt, so daß sich optimale Keimbedingungen einstellen.

Es wird ferner vorgeschlagen, daß die Ausnehmungen zueinander gleichen Abstand aufweisen und radial angeordnet sind. Damit bleiben im Bereich des Scheibenkranzes zwischen den Ausnehmungen der Stärke der Scheibe entsprechende Scheibenkranzteile bestehen, die das Saatgut zusätzlich im Boden andrücken.

Bei jeweils einem an einer Furchenseite gelegenen Zustreichrad, deren Scheibenränder nach innen und oben in Richtung der der Furche zugelegenen Seite abgewinkelt sind, können die Scheiben der beiden Zustreichräder zueinander spiegelbildlich angeordnet sein und mit Bezug auf die Furche konvergieren.

Durch die zum Scheibenkranz hin offenen Ausnehmungen ergibt sich ein wellenförmiger Scheibenkranz, was wiederum das Einschneiden in den Boden und die Abgabe des Erdreichs erleichtert. Im ganzen gesehen, können die Ausnehmungen löffelförmig ausgebildet sein.

In der Zeichnung ist ein nochfolgend näher erläutertes Ausführungsbeispiel der Erfindung dargestellt. Es zeigt:
- Fig. 1: eine Reiheneinheit einer Einzelkornsämaschine in Seitenansicht;
- Fig. 2: die Zustreichräder der Reiheneinheit nach Fig. 1 nach der Blickrichtung der Pfeile 2 : 2 in Fig. 1;
- Fig. 3: ein Zustreichrad in Seitenansicht;
- Fig. 4: ein Zustreichrad in Frontansicht nach den Pfeilen 4 : 4 in Fig.3 und
- Fig. 5: einen Schnitt nach der Linie 5 : 5 in Fig. 3.

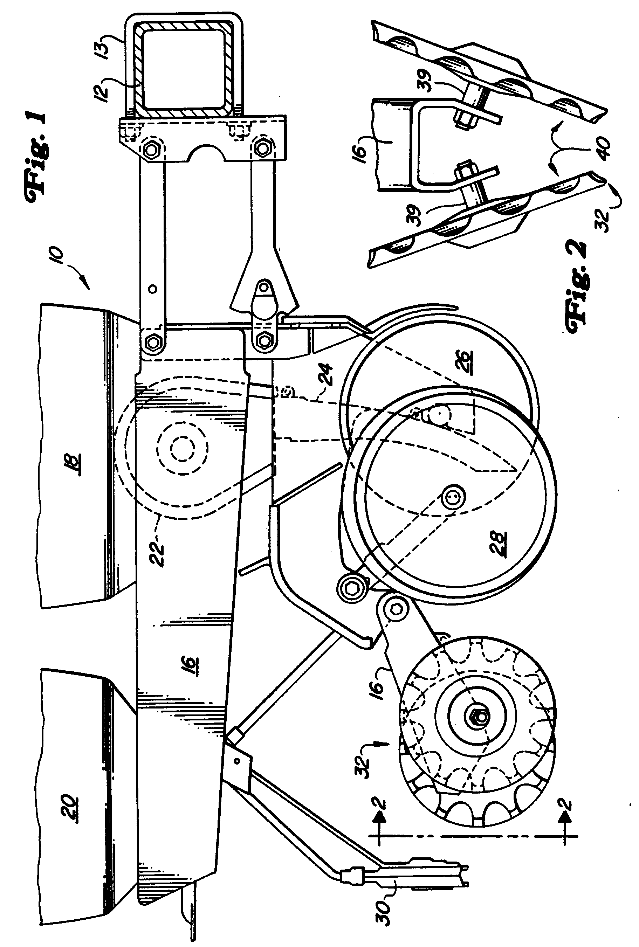

In Fig. 1 der Zeichnung ist eine Reiheneinheit 10 einer im einzelnen nicht weiter dargestellten Einzelkornsämaschine zu erkennen. Mehrere Reiheneinheiten sind nebeneinander an einem querverlaufenden Träger 12 über U-förmige Bügel 13 angeschlossen. Damit jede Reiheneinheit 10 individuell höhenverstellbar ist, kann noch ein Parallelgestänge zwischen einem Tragbock am Träger 12 und einem Rahmenausleger 16, den jede Reiheneinheit aufweist, vorgesehen sein. Der Rahmenausleger 16 trägt einen Saatgutbehälter 18 und einen Behälter 20 für granulierte Pestizide. Saatgut aus dem Saatgutbehälter 18 wird durch eine Dosiervorrichtung 22 entnommen und über ein Saatrohr 24 in gleichmäßigem Abstand und in gleichmäßiger Tiefe in einer Furche abgelegt. Die Furche wird durch einen Furchenöffner 26 gezogen, der mit Stütz- oder Spurrädern 28 zusammen arbeitet. Diese bestimmen die Tiefe der Furche und tragen dazu bei, daß nach dem Furchenschneiden die Furchenränder angedrückt werden und daß keine Bodenreste oder Pflanzenrückstände in die Furche fallen können. Pestizide aus dem Behälter 20 gelangen über eine Austragvorrichtung 30 auf den Boden. Die insoweit beschriebene Einzelkornsämaschine ist herkömmlicher Bauart. Zu ihr gehören noch Zustreichräder 32, deren Ausbildung Gegenstand der vorliegenden Erfindung ist. Zustreichräder dienen zum Schließen der Furche, nachdem das Saatgut abgelegt wurde. Gegebenenfalls wird das Saatgut dabei noch in seiner jeweiligen Stellung festgedrückt. Beim vorliegenden Ausführungsbeispiel befinden sich die nachfolgend im einzelnen zu beschreibenden Zustreichräder 32 an einer Einzelkornsämaschine. Sie können auch an herkömmlichen Drillmaschinen, pneumatischen Sägeräten oder an anders ausgestalteten Sämaschinen Verwendung finden, um eine vorher gezogene Furche zu schließen.

Beim vorliegenden Ausführungsbeispiel sind zwei Zustreichräder 32 an dem Rahmenausleger 16 angeschlossen. Sie sind unmittelbar hinter den Spurrädern 28 angeordnet, und zwar beiderseits einer Furche, die zuvor von dem Furchenöffner 26 gezogen wurde. Anstelle der in Fig. 1 gezeigten, versetzten Anordnung können die beiden Zustreichräder 32 einer Reiheneinheit auch nebeneinander angeordnet sein.

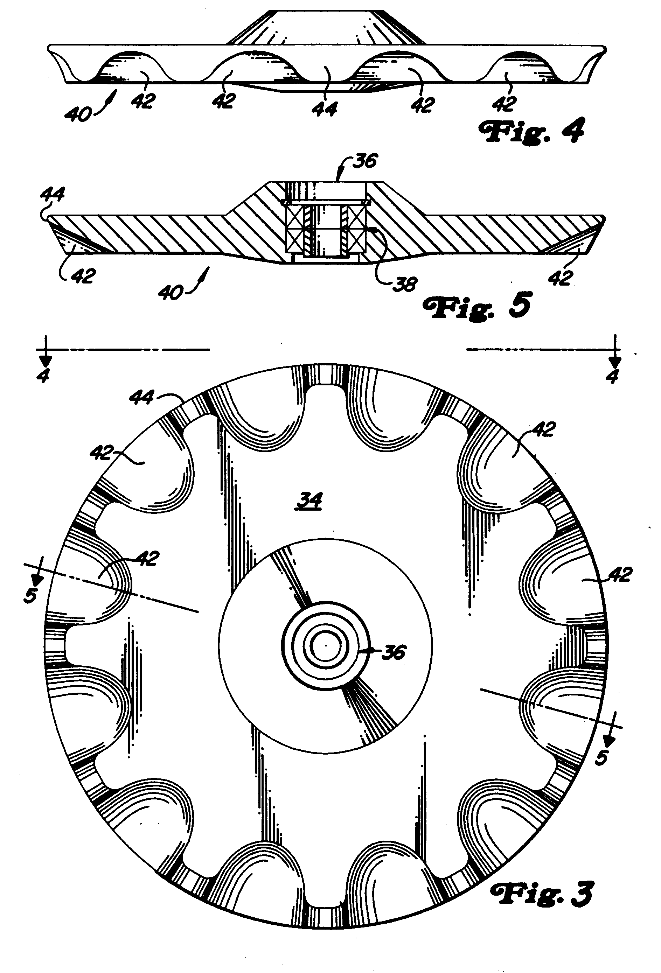

Die Fig. 2 bis 5 zeigen die Anordnung (Fig. 2) und die Ausgestaltung (Fig. 3 bis 5) der Zustreichräder 32. Jedes Zustreichrad 32 besteht im wesentlichen aus einer runden Scheibe 34 mit einer bestimmten Stärke. Die Scheibe 34 hat eine mittige Öffnung 36 für die Aufnahme eines Lagers 38, das die Lagerung einer jeden Scheibe 34 auf einer Stummelwelle 39 gestattet. Diese wiederum ist mittel- oder unmittelbar am Rahmenausleger 16 befestigt. Die der Furche zugelegene Seite einer jeden Scheibe 34 ist mit 40 bezeichnet, wie Fig. 2 zeigt. Der äußere Radkranz einer jeden Scheibe 34 ist zur Furchenseite 40 hin nach oben abgeschrägt (Fig.2). Außerdem ist die Furchenseite 40 einer jeden Scheibe 34 mit radial angeordneten und sich zur äußeren Peripherie 44 erstreckenden Ausnehmungen 42 versehen. Diese sind umlaufend angeordnet und jede erstreckt sich, wie aus Fig. 5 ersichtlich ist, von der Furchenseite 40 der Scheibe 34 in Richtung der der Furchenseite 40 abgelegenen Seite der Scheibe 34 bis zu den äußeren Scheibenkranz. Jede Ausnehmung 42 ist an der Furchenseite 40 und an dem Scheibenkranz offen und verläuft von der Furchenseite aus schräg nach außen. Fig. 4 zeigt, daß an der der Furchenseite 40 abgelegenen Seite einer jeden Scheibe 34 am Scheibenrand ein umlaufender Steg erhalten bleibt, der zusammen mit den Öffnungen der Ausnehmungen 42 am Scheibenkranz eine Wellenform bildet. Aus der Seitenansicht nach Fig. 3 ist zu erkennen, daß die Ausnehmungen etwa halbrund oder muschelförmig gestaltet sind, so daß sich eine Art Löffelform ergibt.

Derartige Zustreichräder 32 werden bevorzugt bei schwierigen Bodenbedingungen, wie sie insbesondere bei einem sogenannten Direktsaatverfahren auftreten, eingesetzt. Im Einsatz laufen die Zustreichräder in einer etwas aus der Vertikalen gekippten Ebene um, wie Fig. 2 zeigt. Durch die Schrägstellung der Scheiben 34 können die an den Scheibenkränzen verbleibenden relativ schmalen Stege scharf in den Boden schneiden und schieben das Erdreich in die Furche. Durch die Ausnehmungen 42 wird Erdreich zusätzlich portionsweise oder löffelartig entnommen und in die Furche geschüttet, ohne daß sich dabei die Lage der Samenkörner verändert. Erdreich wird damit in die Furche geschüttet. Als Folge stellt sich eine einwandfreie Samenbedeckung ein, die den späteren Keimungsprozeß positiv beeinflußt.

## Patentansprüche

1. An ein Sägerät anschließbares und im Einsatz umlaufendes Rad (32) zum Zustreichen einer Saatgutfurche, das scheibenförmig ausgebildet ist, einen äußeren Scheibenkranz aufweist und mit einer der Furche zugelegenen Seite (40) versehen ist, dadurch gekennzeichnet, daß das Rad (32) an seiner der Furche zugelegenen Seite (40) mit Ausnehmungen (42) versehen ist, die sich bis in den Scheibenkranz erstrecken und sich mit Bezug auf den Querschnitt von der Furchenseite (40) aus schräg in Richtung auf die der Furchenseite (40) abgelegene Seite des Rades (32) erstrecken und diese Seite nicht durchdringen.

2. Rad nach Anspruch 1, dadurch gekennzeichnet, daß die Ausnehmungen (42) zueinander gleichen Abstand aufweisen und radial angeordnet sind.

3. Rad nach Anspruch 1, das mit einem weiteren an der anderen Furchenseite gelegenen Zustreichrad (32) zusammenwirkt, wobei deren Scheibenränder nach innen und oben in Richtung der der Furche zugelegenen Seite (40) abgewinkelt sind, dadurch gekennzeichnet, daß die Scheiben (34) der beiden Zustreichräder (32) zueinander spiegelbildlich angeordnet und mit Bezug auf die Furche konvergieren.

4. Rad nach einem oder mehreren der vorherigen Ansprüche, dadurch gekennzeichnet, daß der Scheibenkranz wellenförmig ausgebildet ist.

5. Rad nach einem oder mehreren der vorherigen Ansprüche, dadurch gekennzeichnet, daß die Ausnehmungen (42) löffelförmig ausgebildet sind.

## Claims

1. A wheel (32) which can be attached to a seed drill and which rotates in use for closing a seed furrow, is of disc form, has an outer run and is provided with a side (40) facing the furrow, characterized in that the wheel (32) is provided with recesses (42) on its side (40) facing the furrow, which extend up to the run and which extend in relation to the cross-section from the furrow side (40) obliquely in the direction of the side of the wheel (32) opposite the furrow side (40) and do not penetrate this opposite side.

2. A wheel according to claim 1, characterized in that the recesses (42) have the same distances from one another and are arranged radially.

3. A wheel according to claim 1, which cooperates with a further closing wheel (32) on the other side of the furrow, wherein their disc edges are bevelled off inwardly and upwardly in the direction of the side (40) facing the furrow, characterized in that the discs (34) of the two closing wheels (32) are arranged in mirror image to one another and converge with respect to the furrow.

4. A wheel according to one or more of the preceding claims, characterized in that the run is of wavy form.

5. A wheel according to one or more of the preceding claims, characterized in that the recesses (42) are spoon-shaped.

## Revendications

1. Roue (32) pouvant être raccordée à un semoir et tournant en cours d'utilisation pour fermer un sillon à graines qui est agencé sous la forme d'un disque ayant une zone périphérique ou couronne, et qui présente une face (40) tournée vers le sillon, caractérisée en ce que la roue (32) comporte, au niveau de sa face (40) tournée vers le sillon, des évidements (42) qui s'étendent jusque dans la couronne du disque et s'étendent obliquement, par rapport à la section transversale de la face (40) tournée vers le sillon, en direction de la face de la roue (32) tournée à l'opposé de la face (40) tournée vers le sillon et ne traversent pas cette face tournée à l'opposé de la face tournée vers le sillon.

2. Roue selon la revendication 1, caractérisée en ce que les évidements (42) sont séparés par des distances identiques et sont disposés radialement.

3. Roue selon la revendication 1, qui coopère avec une roue de fermeture (32) située de l'autre côté du sillon et dont les bords du disques sont biseautés vers l'intérieur et vers le haut en direction de la face (40) tournée vers le sillon, caractérisée en ce que les disques (34) des deux roues de fermeture (32) sont disposés symétriquement l'un de l'autre et convergent par rapport au sillon.

4. Roue selon une ou plusieurs des revendications précédentes, caractérisée en ce que la couronne du disque est agencée avec une forme ondulée.

5. Roue selon une ou plusieurs des revendications précédentes, caractérisée en ce que les évidements (42) sont agencés en forme de cuillère.
